Europäisches Patentamt

European Patent Office

Office européen des brevets

(19)

(11) Numéro de publication: **0 248 967**
**A1**

# (12) DEMANDE DE BREVET EUROPEEN

(21) Numéro de dépôt: **86440044.5**

(22) Date de dépôt: **06.06.86**

(51) Int. Cl.³: **B 60 S 9/00**
**B 62 D 5/07**

(43) Date de publication de la demande:
**16.12.87 Bulletin 87/51**

(84) Etats contractants désignés:
**AT BE CH DE FR GB IT LI LU NL SE**

(71) Demandeur: **Diaz, Agustin Espina D.**
**Rue Hermanos Felgueroso 1**
**Gijon (Asturies)(ES)**

(72) Inventeur: **Diaz, Agustin Espina D.**
**Rue Hermanos Felgueroso 1**
**Gijon (Asturies)(ES)**

(74) Mandataire: **Arbousse-Bastide, Jean-Claude**
**CABINET ARBOUSSE BASTIDE 20, rue de Copenhague**
**F-67000 Strasbourg(FR)**

(54) Système hydraulique.

(57) Le système comporte un groupe de commande électro-hydraulique, un tableau de bord et des éléments commandés disposés sur le véhicule et avec des fonctions spécifiques dans chaque cas, ce groupe comportant un moteur électrique (4) commandant une pompe (4e) accouplée sur un circuit hydraulique lequel part d'un dépôt de fluide (4), pourvu d'éléments de remplissage (3), de vidange, de filtre (10) et de trou de contrôle de la capacité (2), vers une série d'électro-valves (9.1-9.6) commandant les éléments correspondants (18.1-18.6) et au moins d'une valve ou soupape de sécurité (13); tandis que le tableau de bord est disposé de telle facon qu'il commande le moteur (4) et/ou chacune des électro-valves (9.1-9.6) les éléments commandes (18.1-18.6) etant de préférence des cylindres hydrauliques, le groupe de contrôle pouvant être placé n'importe où dans la voiture, et le tableau de bord étant d'accès facile à l'usager, caractérisé en ce que les éléments commandés ou cylindres hydrauliques (18.1-18.6) sont disposés dans le châssis du véhicule prêts pour sortir jusqu'à heurter le sol, afin d'obtenir le soulèvement total ou partiel de celui-cu.

EP 0 248 967 A1

Croydon Printing Company Ltd.

./...

FIG.2

- 1 -

# SYSTEME HYDRAULIQUE.

L'invention propose un système hydraulique applicable surtout à des véhicules et destiné essentiellement à l'obtention d'une élévation totale ou partielle de celui-ci au moyen de l'insertion d'une série de cylindres hydrauliques, commandés par le système, placés dans le châssis du véhicule et capables de heurter le sol pour mener à bien ladite fonction. Cependant, ne sont pas exclues d'autres fonctions possibles avec ce système, direction totalement hydraulique, frein auxiliaire, et dans tous les cas nécessaires une source hydraulique propre.

L'élévation totale du véhicule, obtenue au moyen des cylindres hydrauliques cités qui le supportent, permet la réalisation d'une série d'opérations de réparation et d'entretien du véhicule et des petits déplacements de celui-ci, car il est prévu que les cylindres cités aient des moyens de roulement extrêmes, qu'il est possible de commander même à l'aide d'un moteur hydraulique réduit.

L'élévation partielle du véhicule permet de changer les roues, de placer des chaînes sur celles-ci, de réviser les freins, etc...

Le tout sans avoir besoin d'aucun moyen auxiliaire ou de cric ou vérin, soit dans l'atelier soit sur la route.

Le système hydraulique ici préconisé comprend

- 2 -

essentiellement un groupe de commande électro-hydraulique ou groupe de pompage. Ce groupe a été conçu de sorte qu'il constitue un bloc unitaire pouvant être placé n'importe où dans le véhicule.

Le groupe de commande cité comprend, pour son contrôle, une série d'électro-soupapes activées depuis des commandes à la portée de l'usager sur un tableau de bord.

Ce système prévoit deux réalisations différentes pour l'élévation du véhicule. Les véhicules lourds ont quatre/six cylindres, placés dans les longerons du châssis, verticalement et sont commandés tous par une électro-valve dont le débit d'alimentation aux cylindres est contrôlé au moyen de diviseurs du débit, ceci pour que tous les cylindres sortent avec la même vitesse et le même déplacement. Cette réalisation prévoit un transducteur de pression à poids ce qui permet un tarage précis du poids total du véhicule.

Cependant, dans les véhicules réduits, du type automobile, l'existence de cylindres verticaux appuyés sur le châssis peut poser des problèmes d'espace, si nous considérons que la longueur de la tige du piston est presque la même de la chemise du cylindre, et aussi parce que le bout de la tige dans sa position de distension doit s'appuyer sur le sol, dans la position de compression le cylindre resterait à une hauteur assez proche du sol. L'on dispose alors les cylindres sur un support, associé au châssis du véhicule, horizontalement par rapport à la position d'avancement du véhicule et orientés dans des directions opposées. Au bout de la tige s'articule une patte pourvue d'éléments intérieurs amortisseurs, associée au moyen d'entretoises verticales audit support du cylindre. Cette patte, commandée par le cylindre lui-même, peut adopter deux positions : une position de repos, avec le cylindre en compression, et alors la patte devient une prolongation de celui-ci, et une position de travail, avec la tige du piston distendue, et alors la patte se situe selon un angle de 90° avec celui-ci, et adopte la position verticale.

- 3 -

Les avantages obtenus avec le système de la présente invention doivent être établis parallèlement à l'étude des différentes fonctions que le système peut réaliser. Cependant, et à titre d'exemple, nous citerons seulement que les possibilités de soulèvement total ou partiel, et aussi la possibilité d'un tarage précis dont dispose le système, constituent deux facteurs essentiels qui fournissent une solution, pratique et simple, aux plus grands problèmes, encore rencontrés aujourd'hui : l'auto-pesage de véhicules lourds et l'existence d'un système d'élévation du véhicule, avec les avantages dérivés pour ce qui est des réparations et d'amortissement, ce qui constitue en outre un système évident d'antivol.

Ceux-ci et d'autres avantages qui découleront de la description détaillée que nous faisons par la suite, supposent des facteurs en appui du système hydraulique dont nous avons déjà parlé dans la première partie de ce mémoire. Cette description détaillée se fait sur la base des plans ci-joints, dans lesquels :

- la figure 1 représente dans une vue en plan et en élévation une réalisation du groupe de commande électro-hydraulique de ce système.;

- la figure 2 représente un schéma hydraulique possible du sytème ;

- la figure 3 représente un schéma électrique applicable à la réalisation hydraulique de la figure 2 ;

- la figure 4 représente une vue en élévation, avec plusieurs sections partielles, d'une réalisation pratique préférentielle des cylindres d'élévation d'un véhicule léger.;

- la figure 4a représente la section CD, indiquée sur la figure 4 ;

- la figure 4b représente la section AB indiquée sur la figure 4.;

- la figure 5 représente un schéma hydraulique préférentiel pour un véhicule lourd, pourvu de moyens d'auto-pesage.

Conformément à ce qui figure représenté et selon la signification de l'invention, le système hydraulique ici préconisé, et d'application préférentielle sur des véhicules automobiles, des camions, des autobus etc..., comporte essentiellement trois groupes fonctionnels :

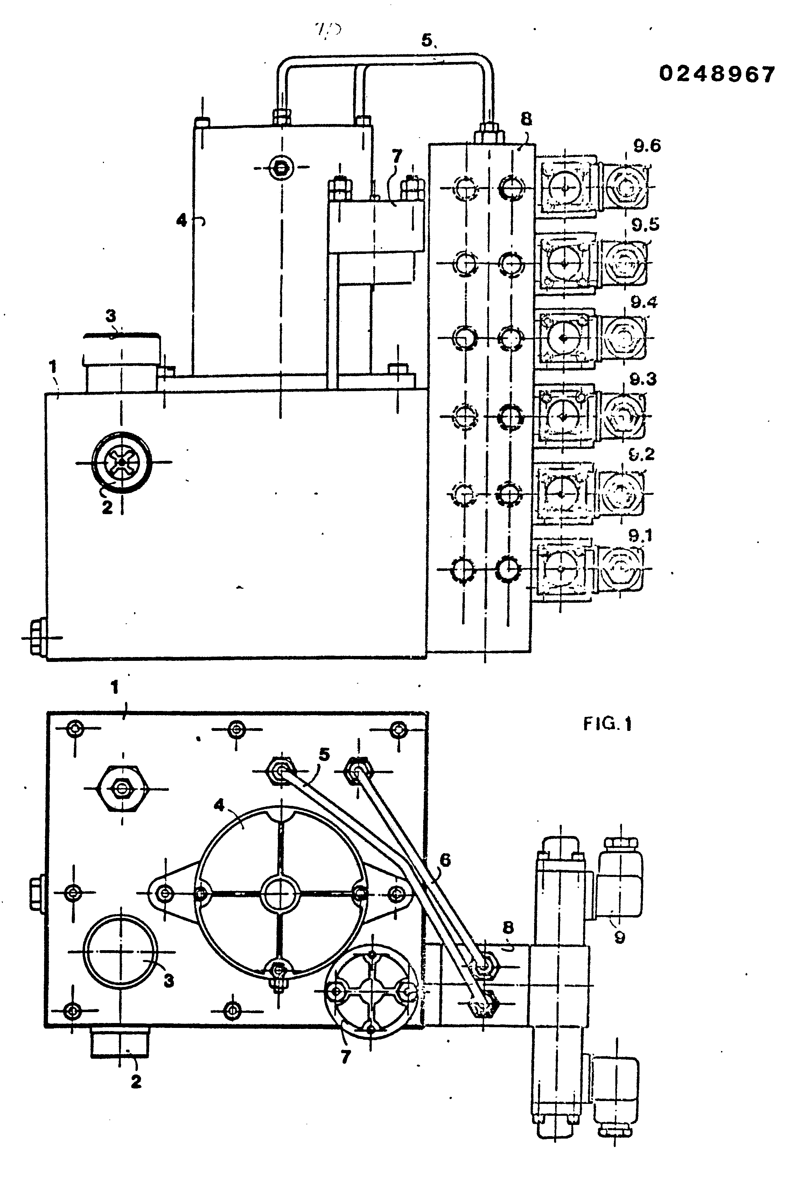

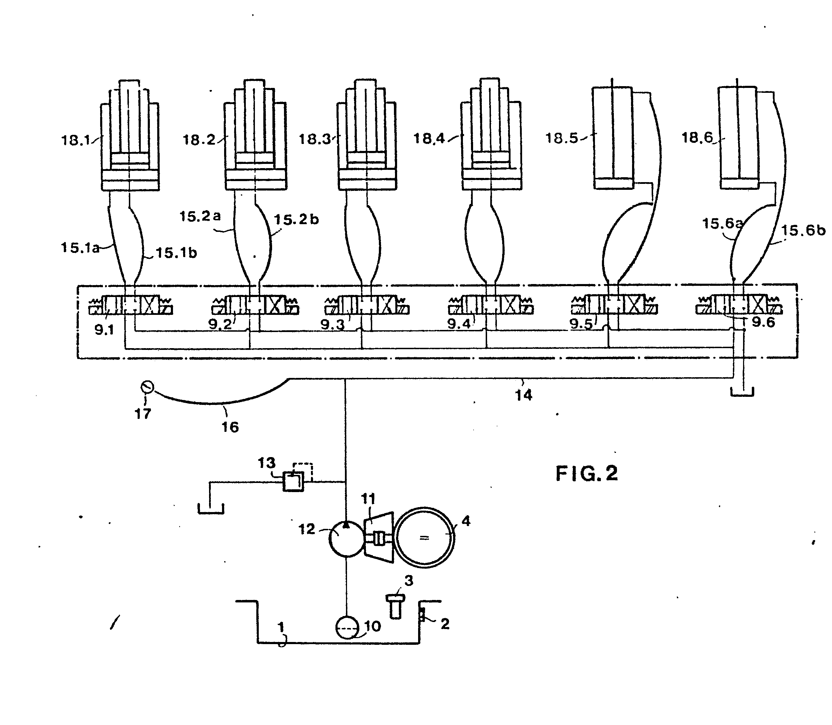

- un groupe de commande éléctro-hydraulique, correspondant au bloc représenté sur la figure 1 et au schéma hydraulique représenté sur la figure 2, jusqu'où arrivent les différentes conduites flexibles (15).

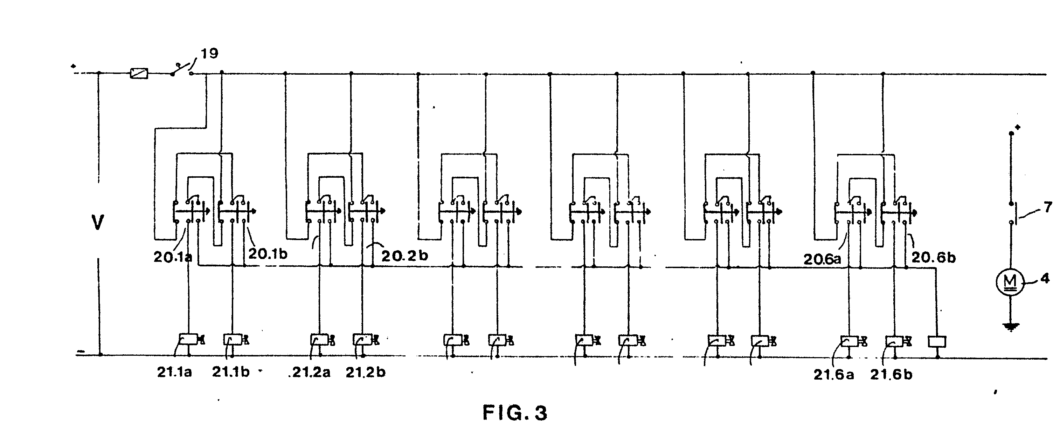

- un groupe de commande ou de réglage, comme celui représenté sur la figure 3 ;

- un groupe agissant, commandé par les précédents, constitué en général par plusieurs cylindres hydrauliques (18).

Le groupe agissant ou de contrôle cité comporte un moteur électrique (4), relié au moyen de l'accouplement élastique (11) à une pompe hydraulique (12). Cette pompe est incluse dans un circuit disposant d'un dépôt de fluide (1), d'une soupape de sécurité (13) et d'une sortie à une série d'électrovalves (9) numérotées successivement de 1 à n.

Le moteur de courant continu est commandé depuis la batterie elle-même du véhicule ou depuis une batterie auxiliaire ; sur l'axe dudit moteur, au moyen d'une transmission appropriée (11) l'on incorpore la pompe hydraulique (12), qui dans la représentation physique de la figure (1) est incluse à l'intérieur du dépôt (1) lequel dispose en général d'un bouchon de remplissage (3), d'un trou d'observation du niveau (2) et d'un bouchon de vidange. La sortie de cette pompe (12) est raccordée à une soupape de surpression (13) ce qui évidemment crée une voie de retour du fluide du dépôt (1).

La sortie du circuit hydraulique de la pompe (12) se fait vers plusieurs électro-valves (9) contrôlant le passage du fluide vers l'élément commandé (18) correspondant, réglée par le pulsateur correspondant (20). Le but de ces électro-valves est celui d'agir en tant que chaînon entre la zone programmée et la zone d'exécution du circuit, et en général il s'agit d'un distributeur longitudinal construit avec une grande préci-

0248967

- 5 -

sion et commandé par un système électro-magnétique comme celui représenté sur la figure 3, permettant le positionnement de la coulisse sur n'importe quel point compris entre les extrémités et le milieu ; ce positionnement de la coulisse est toujours proportionnel à l'intensité du courant électrique d'excitation de la bobine et varie selon le signe de celui-ci.

Le groupe que nous avons décrit jusqu'ici est inclus dans le bloc représenté sur la figure 1, selon la disposition graphique de celui-ci, dans lequel le dépôt (1) constitue la base du bloc, à l'intérieur duquel se trouve la pompe (12) et dans sa partie supérieure, accouplée à celle-ci, le moteur (4) relié par différentes conduites de pression (5) et de retour du fluide (6) à une plaque-base, des différentes électro-valves (9), lesquelles, au moyen de conduites flexibles (15) se relient aux éléments commandés (18).

Sur la figure 2 sont représentés les différentes électro-valves sous la référence (9), les conduites flexibles sous (15) et les éléments commandés sous (18) ; il y a aussi un deuxième numéro correspondant dans chaque cas au groupe constitué par chaque électro-valve, les conduites d'allée sous (a) et de retour, comme (b). Aussi, sur la figure 3 et pour le schéma électrique nous avons représenté la même disposition, avec le pulsateur pour la commande des électro-valves avec le numéro correspondant à celle-ci et un indice (a) pour les positions d'avancement de l'élément commandé et (b) pour le recul.

Le deuxième groupe fondamental de ce système est constitué par le circuit correspondant de commande et de contrôle de celui-ci, lequel, en général, se trouve dans un endroit d'accès facile pour l'usager. Ce circuit s'alimente de la même batterie que le moteur (4) et se fait selon une série de paires de pulsateurs agissant sur chacune des électro-valves correspondantes. Le moteur (4) est alimenté dans cette batterie au moyen d'un contacteur (7) commandé en pressant n'importe lequel des éléments du clavier (20). La totalité du circuit a à l'entrée le fusible et l'interrupteur correspondants (19), lequel dans une

- 6 -

réalisation préférentielle est du type clé, possible d'accoupler même au contact du véhicule.

Chaque paire de pulsateurs (20) dispose d'un premier pulsateur, activeur du moteur (4) et par conséquent de la pompe (12), lequel ouvre l'électro-valve correspondante dans un sens déterminé et d'un deuxième pulsateur permettant le retour du fluide vers le dépôt, ce qui permet donc la fonction inverse.

Le troisième groupe est constitué par une série d'éléments commandés (18) en général des cylindres de double effet, synchronisés entre eux, pour empêcher qu'ils descendent brusquement lors du retour du fluide vers le dépôt. Ces éléments sont disposés dans plusieurs endroits du véhicule et chacun réalise une fonction spécifique ; les fonctions prévues pour chacun d'eux sont les suivantes :

- les cylindres (18.1) à (18.4) seront placés sur le même nombre de points dans la partie inférieure du véhicule, de sorte qu'en commandant n'importe lequel d'entre eux, ou tous, on obtient l'élévation totale ou partielle du véhicule, avec les avantages que cela comporte.

Le cylindre (18.5) commande un dispositif basculeur associé au véhicule, si celui-ci est déjà pourvu de cette caractéristique d'auto-basculement ou si c'est possible de l'introduire. Le cylindre (18.5) et le cylindre (18.6) peuvent se placer aussi des deux côtés du véhicule, de sorte qu'en soulevant celui-ci au préalable grâce aux cylindres avant cités et en appuyant le cylindre latéral sur le sol l'on obtient un déplacement latéral dans n'importe quel sens, en appuyant le véhicule seulement sur les cylindres élévateurs.

Quoique sur les figures ne sont pas représentés d'autres éléments commandés (18) l'on a prévu aussi l'inclusion d'un distributeur qui commande une direction totalement hydraulique, que l'on peut diriger aussi avec des pulsateurs.

En outre, sur le tableau de bord l'on dispose d'une conduite flexible (16), d'un manomètre (17), pour capter la pression supportée par le circuit hydraulique. Il est prévu que ledit manomètre compte avec une deuxième échelle correctrice transformant la pression en poids, ce qui permet, en soulevant le véhicule au moyen des cylindres cités, d'obtenir sur l'échelle une référence précise du tarage du véhicule.

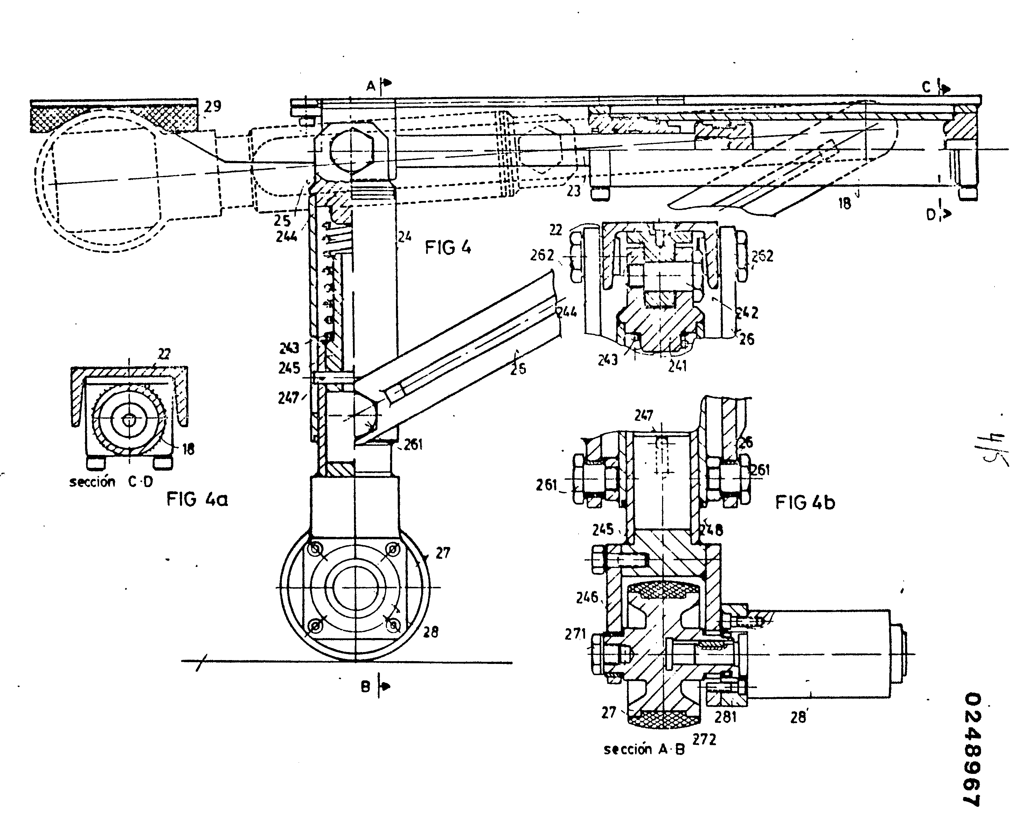

En considérant maintenant les figures 4, sur lesquelles sont représentées la façon d'inclure dans le châssis du véhicule un support en "U" (22) d'un cylindre hydraulique (18) avec une tige de piston (23) au bout de laquelle, à l'aide du boulon (25) s'articule une patte (24) pourvue à l'extrémité d'un élément de roulement (27) commandé par un moteur hydraulique (28). Le bout de cette patte (24) a deux saillies (261) sur lesquelles s'articule un longeron (26) dont l'extrémité s'articule avec le support (22) au moyen de deux boulons (262). Sur la figure 4 est représentée la position de travail : le véhicule est soulevé - gros traits -. La position de repos est indiquée avec des traits coupés.

La patte amortie (24) présente dans la partie supérieure des éléments charnière (244) définissant un entaillage intérieur où heurte un ressort (243). La chemise de cette patte (24) est soudée à la charnière citée (244). A l'intérieur de la chemise de cette patte (24) se trouve une tige (245) qui heurte aussi le ressort (243). La course de cette tige (45) est limitée par la cheville (247) se déplaçant le long d'un orifice qu'elle possède.

Les moyens d'amortissement prévus pour la patte (24), présentés sur la figure 4 comme ayant un caractère mécanique au moyen du ressort (243) peuvent aussi être réalisés dans un système hydraulique.

Le bout de la tige (245) s'associe à un support en "U" (246) comportant dans les extrémités des ailes et perpendiculairement à ces ailes, un axe (271) de la roue (27) pourvue périphériquement d'une jante (272). Par l'un des bouts de l'axe s'accouple un moteur hydraulique (28) supporté par une pièce de liaison (281) entre le moteur cité et le support (246) près

- 8 -

des extrémités de la chemise de la patte (24) il y a deux saillies (248) sur lesquelles au moyen de la vis (261) et en insérant le roulement correspondant s'articulent latéralement deux longerons (26) dont le bout s'associe avec les vis (262) au support (22), conçu aussi pour pouvoir faire un déplacement axial.

Constitué de la sorte le dispositif objet de cette réalisation et en faisant référence à la représentation avec des traits sur la figure, dans laquelle la tige (23) est compressée à l'intérieur du cylindre (18), avec la patte (24) comme prolongement de la tige, de même que le longeron (26), la roue (27) s'emboîtant dans la butée élastique (29) placée dans la partie inférieure du véhicule. Lorsque la tige (23) se distend et grâce au longeron (26) la patte (24) tourne jusqu'à la position sur la figure 4, se plaçant verticalement par rapport au châssis du véhicule qu'il supporte.

Le longeron (26) se situe près du bout arrière du cylindre (18) et de la patte (24) afin d'obtenir un arc de tir suffisant pour empêcher des fractures éventuelles en raison de la traction réalisée. En considérant que, la longueur de la tige (23) est presque égale à celle du cylindre (18), longueur que nous désignerons C ; que la longueur du longeron (26) sera "T" et que la longueur de la patte amortie (24) s'appelle "P" :

- dans la position représentée sur la figure 4 avec un gros trait, montrant la tige distendue et celui-ci formant le cylindre avec la patte et le longeron en angle droit, nous avons :

$$(2\ C)^2 + P^2 = T^2.$$

Dans la position du cylindre en compression, dans laquelle la patte est le prolongement de celui-ci, la longueur du longeron est égale à celle de la patte plus celle du cylindre, c'est-à-dire :

$$T = P + C.$$

Des deux formules précédentes, nous obtenons :

- 9 -

$$4\,C^2 + P^2 = P^2 + C^2 + 2\,P\,.\,C$$
$$3\,C^2 = 2P\,.\,C$$
$$3\,C = 2P$$

$P = 3/2C$, en remplaçant cette valeur dans la deuxième, nous avons une valeur de $P = 5/2C$.

Ces valeurs sont considérées orientatives et en aucun cas limitatives, car l'on n'a pas pris en considération une série de facteurs comme la longueur de la tige du cylindre, qui n'est pas exactement égale à la longueur du cylindre lui-même, en outre, il y a des magnitudes fixes comme celle de la charnière unissant la patte avec la tige, laquelle, évidemment ne peut pas se cacher à l'intérieur du cylindre. Cependant, et à des fins théoriques, ces magnitudes se considèrent suffisamment proches.

Selon la signification de l'invention, la longueur du longeron est telle que les positions extrêmes du piston définissent des situations angulaires de ceux-ci, par exemple la patte placée horizontale et verticale, la longueur de ce longeron étant entre deux et trois fois la course de ladite tige.

Selon une autre caractéristique de l'invention, la longueur de la patte doit être suffisante pour permettre le soulèvement du véhicule et a une valeur d'une ou deux fois la longueur parcourue par la tige du cylindre.

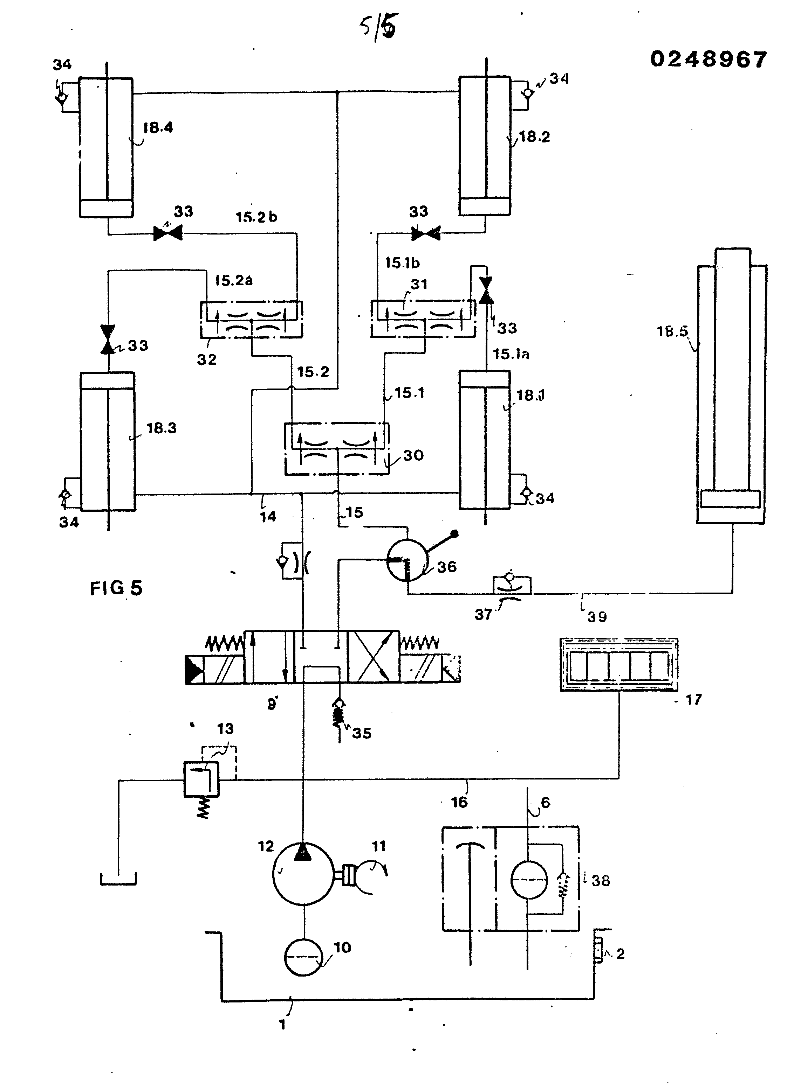

En considérant à présent la figure 5, dans laquelle l'on observe un schéma hydraulique introduisant une série de variantes par rapport à celui sur la figure 2, ce schéma hydraulique part aussi d'un dépôt de fluide (1), pourvu d'un trou de contrôle (2), d'où part une ligne de conduite de fluide laquelle, à travers un filtre d'aspiration (10) est mise en mouvement au moyen de la pompe (12) accouplée à un moteur, au moyen d'un accouplement élastique (11). A travers une électro-valve (9) le fluide sort par une conduite (15) laquelle se bifurque après en deux parallèles (15.1) et (15.2) au moyen d'un premier diviseur du débit (30). Chacune de ces bifurcations se bifurque à son tour en deux autres (15.1a) et (15.1b) au moyen des diviseurs de débit correspondants (31) et (32). De cette façon l'on obtient dans les cylindres (18) la même course avec la même vitesse d'expansion dans tous.

Les cylindres cités sont protégés avec des valves ou soupapes d'isolement (33) et avec des limiteurs de fin de course (34) compris dans le corps du piston lui-même. La ligne de retour du fluide (14) se fait à travers un régulateur de débit.

De cette manière et grâce au contrôle exercé par l'électro-valve (9) commandée par une série de pulsateurs, on commande l'impulsion synchronisée des cylindres d'élévation, en permettant le soulèvement total du véhicule d'une façon uniforme et à la même vitesse d'élévation.

La conduite de sortie a une dérivation (39), laquelle moyennant un sélecteur de circuit (36) permet l'impulsion d'un cylindre auxiliaire (18.5), en général disposé en tant que moyen de basculement du véhicule.

Evidemment le circuit hydraulique dispose d'autres éléments accessoires —des soupapes de sécurité (13) et filtre de retour et d'air (38).

La conduite de sortie de la pompe (12) a une dérivation (16) vers un transducteur (17), qui mesure la pression et la transforme en unités de force. Cet appareil comprend aussi un moyen de lecture directe et d'impression, une montre, de sorte que l'on peut l'utiliser en tant que bascule autonome associée au véhicule. Ces transducteurs, relativement connus sur le marché actuel ont une tolérance d'environ 0,25 % $\pm$ très au-dessous d'une bascule statique normale. Par exemple, pour un véhicule avec un poids de 50 tonnes, la tolérance admise est de $\pm$ 125 kilos.

Après avoir décrit le long de ce mémoire la nature de l'invention et aussi une réalisation industrielle préférentielle de celui-ci, nous voulons seulement ajouter que dans son ensemble et dans ses parties composantes il est possible d'y introduire des changements de forme, de matériel et de disposi-

- 11 -

tion, toutefois, si ces modifications ne supposent pas une variation essentielle de la nature de l'invention.

REVENDICATIONS.

1.      Système hydraulique, du type comportant un groupe de commande électro-hydraulique, un tableau de bord et des éléments commandés disposés sur le véhicule et avec des fonctions spécifiques dans chaque cas, ce groupe comportant un moteur électrique commandant une pompe accouplée sur un circuit hydraulique lequel part d'un dépôt de fluide, pourvu d'éléments de remplissage, de vidange, de filtre et de trou de contrôle de la capacité, vers une série d'électro-valves commandant les éléments correspondants et au moins d'une valve ou soupape de sécurité ; tandis que le tableau de bord est disposé de telle façon qu'il commande le moteur et/ou chacune des électro-valves, les éléments commandés étant de préférence des cylindres hydrauliques, le groupe de contrôle pouvant être placé n'importe où dans la voiture, et le tableau de bord étant d'accès facile à l'usager, caractérisé parce que les éléments commandés ou cylindres hydrauliques sont disposés dans le châssis du véhicule prêts pour sortir jusqu'à heurter le sol, afin d'obtenir le soulèvement total ou partiel de celui-ci.

2.      Système hydraulique, selon la revendication précédente, caractérisé en ce que lesdits cylindres sont montés horizontalement dans le châssis de celui-ci, opposés entre eux, et dans le sens du mouvement, au moyen d'un support en "U", le bout de la tige du piston ayant la charnière d'une patte amortie, en relation avec le support du cylindre au moyen de deux longerons latéraux s'articulant dans le point d'union des deux éléments, de sorte qu'en étant compressée la tige du piston la patte adopte une position de prolongement de celui-ci, et lorsque le piston est distendu la patte décrit un angle droit et se place verticalement, en soulevant ainsi la voiture.

3.      Système hydraulique, selon la revendication 2, caractérisé en ce que le bout de cette patte a un support en "U" où se place une roue, dont l'axe se situe sur un plan perpendiculaire à celui du déplacement de la patte, la roue étant commandée par un petit moteur hydraulique solidaire, capable de s'auto-orienter.

4.        Système hydraulique, selon les revendications 2 et 3, caractérisé en ce que la longueur des longerons latéraux est telle que les deux positions extrêmes de la tige du piston définit des situations angulaires de ceux-ci, la patte se plaçant horizontale et verticale, cette longueur étant deux ou trois fois la course de ladite tige.

5.        Système hydraulique, selon les revendications 2, 3 et 4, caractérisé en ce que la longueur de la patte doit être suffisante pour soulever le véhicule et en ce que cette longueur comprend une ou deux fois la course du piston.

6.        Système hydraulique, selon la revendication 1, caractérisé en ce que les cylindres prévus dans le châssis du véhicule pour son élévation sont synchronisés entre eux au moyen de diviseurs de débit, en parallèle, pour obtenir un déplacement et une vitesse d'expansion uniforme sur tous et en ce que dans un véhicule lourd ceux-ci se placent verticalement.

7.        Système hydraulique, selon la revendication 6, caractérisé en ce que les cylindres ont des limitateurs de course, limitant la pression supportée au-delà des limites normales du véhicule, en créant s'il y a ouverture, un chemin de retour du fluide au dépôt.

8.        Système hydraulique, selon la revendication 1, caractérisé en ce que la conduite d'alimentation aux cylindres cités a une sortie parallèle vers un transducteur digital d'unités de pression en unités de poids, constituant un dispositif précis de tarage du véhicule, et en ce que ce transducteur est pourvu de moyens de lecture directe et d'impression, en plus d'une montre, ce qui permet son utilisation en tant que bascule autonome associée au véhicule lui-même.

9.        Système hydraulique, selon la revendication 1, caractérisé en ce qu'il est susceptible d'inclure un sélecteur de circuit pour faciliter ou développer d'autres fonctions, par exemple une direction hydraulique ou le basculement du véhicule.

- 14 -

10.        Système hydraulique tel qu'il a été décrit dans le présent mémoire, comportant quatorze pages dactylographiées, accompagnées de leurs dessins correspondants.

0248967

FIG.1

FIG.2

FIG. 3

FIG 5

## RAPPORT DE RECHERCHE EUROPEENNE

Office européen
des brevets

Numero de la demande

**0248967**

EP  86 44 0044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | EP-A-0 168 050  (HIDROKAR)<br>* En entier *<br><br>----- | 1-9 | B 60 S    9/00<br>B 62 D    5/07 |

**DOMAINES TECHNIQUES RECHERCHES (Int Cl 4)**

B 60 S
B 60 R

Le présent rapport de recherche a été établi pour toutes les revendications

| Lieu de la recherche | Date d'achèvement de la recherche | Examinateur |
|---|---|---|
| LA HAYE | 10-02-1987 | VERLEYE J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82